# EUROPÄISCHE PATENTSCHRIFT

(11) **EP 2 646 304 B1**
(45) Veröffentlichungstag und Bekanntmachung des Hinweises auf die Patenterteilung: **01.03.2017**
(21) Anmeldenummer: 11791526.4
(22) Anmeldetag: 01.12.2011
(51) Int. Cl.: B60W 30/095, B60W 50/14

(54) **VERFAHREN ZUR UNTERSTÜTZUNG EINES FAHRERS EINES KRAFTFAHRZEUGS**
METHOD FOR ASSISTING A DRIVER OF A MOTOR VEHICLE
DISPOSITIF D'AIDE À LA CONDUITE POUR UN CONDUCTEUR DE VÉHICULE AUTOMOBILE

(30) Priorität: 02.12.2010 DE 102010062350
(43) Veröffentlichungstag der Anmeldung: 09.10.2013
(73) Patentinhaber: Robert Bosch GmbH, 70442 Stuttgart (DE)
(72) Erfinder: HECKEL, Joerg, 71277 Rutesheim (DE); MIELENZ, Holger, 73760 Ostfildern (DE)
(86) Internationale Anmeldenummer: PCT/EP2011/071455
(87) Internationale Veröffentlichungsnummer: WO 2012/072719

(56) Entgegenhaltungen:
- EP-A2- 1 912 081
- WO-A1-2004/025323
- DE-A1-102005 036 714
- JP-A- 2004 062 380

## Beschreibung

### Stand der Technik

Die Erfindung betrifft ein Verfahren zur Unterstützung eines Fahrers eines Kraftfahrzeugs bei einem Fahrmanöver sowie eine Vorrichtung zur Durchführung des Verfahrens.

Verfahren zur Unterstützung eines Fahrers bei einem Fahrmanöver werden zum Beispiel eingesetzt, um den Fahrer bei Einparkmanövern zu unterstützen. Zur Durchführung des Verfahrens werden so genannte Fahrassistenzsysteme eingesetzt. Neben Systemen, die den Fahrer beim Einparken unterstützen, sind weiterhin auch Fahrassistenzsysteme erhältlich oder in der Entwicklung, die den Fahrer zum Beispiel auch bei Fahrten auf engen Straßen oder in anderen Fahrsituationen unterstützen.

Bei den Fahrassistenzsystemen, insbesondere bei Einparkassistenzsystemen, wird unterschieden in semi-automatische und automatische Systeme. Bei automatischen Systemen wird sowohl die Längsführung, d.h. Beschleunigen, Bremsen und Geschwindigkeit Halten, als auch die Querführung, d.h. das Lenken des Fahrzeuges, vom Fahrassistenzsystem übernommen. Der Fahrer hat lediglich eine überwachende Aufgabe. Bei semi-automatischen Systemen wird entweder die Längsführung vom Fahrassistenzsystem übernommen und dem Fahrer obliegt die Querführung oder aber die Querführung wird vom System übernommen und dem Fahrer obliegt die Längsführung. Weiterhin sind auch Systeme am Markt, bei denen der Fahrer sowohl Längsführung als auch Querführung übernimmt, dem Fahrer jedoch zur Unterstützung Hinweise gegeben werden, wie dieser das Fahrzeug zu steuern hat.

Bei Fahrassistenzsystemen, bei denen der Fahrer im Niedergeschwindigkeitsbereich, beispielsweise bei Fahrten mit Geschwindigkeiten von weniger als 30 km/h, das Fahrzeug bewegt, besteht die Möglichkeit, das Fahrassistenzsystem zum Beispiel durch Übersteuern eines vorgegebenen Lenkmoments abzuschalten und so die Kontrolle über das Fahrzeug zu übernehmen. Auch sind Fahrassistenzsysteme in der Entwicklung, bei denen bei Fahrmanövern mit Rückwärtsfahrt eine Notbremsung eingeleitet wird, sobald eine Kollision als unvermeidlich angesehen wird.

Um zu vermeiden, dass das Fahrmanöver, bei dem bei rückwärts gerichteten Fahrzügen eine Notbremsung eingeleitet wird, sobald ein Unfall als unvermeidlich angesehen wird, vom Fahrer als "Alltagsparkhilfe" zweckentfremdet wird, greift das System so spät wie möglich ein, um gerade noch eine mögliche Kollision zu verhindern, wobei der Bremsvorgang nicht mehr im Komfortbereich erfolgt.

Bei Vorwärtsfahrten, insbesondere bei solchen, die einen Abbiegevorgang umfassen, besteht die Möglichkeit, dass der Fahrer zwar eine kontinuierliche Unterstützung erfährt, jedoch das Fahrzeug zu schnell bewegt, um eine mögliche Kollision mit einem Objekt, das sich außerhalb des Sichtbereichs des Systems befindet, vermeiden zu können. So kann zum Beispiel bei Abbiegemanövern mit den Sensoren nicht erfasst werden, was sich zum Beispiel hinter einem Hindernis im Bereich des inneren Kurvenradius befindet. Um zu vermeiden, dass es zu einer Kollision mit einem Objekt kommt, wird der Funktionsumfang eines Fahrassistenzsystems derzeit soweit reduziert, bis eine ausreichende Funktionalität des Systems bezüglich noch tolerierbarer Fehlerraten erreicht wird.

Verfahren, die den Fahrer bei der Durchführung eines Fahrmanövers unterstützen, sind zum Beispiel in DE-A 10 2008 021 154 oder DE-A 10 2007 002 266 beschrieben.

Die DE 10 2005 036 714 A1 beschreibt ein System zur Unterstützung eines Fahrers beim Spurwechsel. Dabei werden Objekte in der Umgebung des Fahrzeugs mit Sensoren, beispielsweise Radarsensoren, erfasst und der Fahrer wird gewarnt, wenn ein vom System präzidierter Spurwechsel zu einer Kollision oder zu einer Beeinträchtigung der anderen Verkehrsteilnehmer führen würde. Das System beinhaltet außerdem eine Warnfunktion an den Fahrer, wenn der Sensor ein potentiell gefährliches Objekt nicht mehr erfasst, da es sich im Radarschatten eines anderen Fahrzeugs befindet. Damit wird der Fahrer darauf aufmerksam gemacht, dass das Unterstützungssystem nicht zur Verfügung steht und er sich in dieser Situation nicht auf das Unterstützungssystem verlassen kann.

### Offenbarung der Erfindung

### Vorteile der Erfindung

Ein erfindungsgemäßes Verfahren zur Unterstützung eines Fahrers eines Kraftfahrzeugs bei einem Fahrmanöver umfasst folgende Schritte:
(a) Erfassen der Umgebung und Erstellen eines dreidimensionalen Modells aus den erfassten Daten der Umgebung,
(b) Prädizieren eines Fahrmanövers, das der Fahrer des Fahrzeugs voraussichtlich durchführen wird,
(c) Ausgabe einer Warnung an den Fahrer des Kraftfahrzeugs, wenn das im Schritt (b) prädizierte Fahrmanöver Systemgrenzen eines zur Unterstützung des Fahrers eingesetzten Fahrassistenzsystems überschreitet.

Durch die Ausgabe der Warnung an den Fahrer ist es möglich, den Fahrer an die jeweiligen Grenzen des Fahrassistenzsystems zu gewöhnen. Der Fahrer lernt somit durch aktive Hilfestellung des Fahrassistenzsystems, in welchen Grenzen er dieses einsetzen kann. Hierdurch wird das Fahrassistenzsystem in seiner voll umfänglichen Funktion auch Fahrern zugänglich, die bei derzeitigen sehr aufwendigen Textdokumentationen nicht alles verstehen oder sich das Wissen nicht aneignen können. Weiterhin ist es durch die Ausgabe der Warnung auch möglich, dem Fahrer die Entscheidung zu überlassen, ob er weiterhin eine Unterstützung durch das Fahrassistenzsystem wünscht oder das Fahrmanöver selbsttätig fortsetzen möchte.

Die Erfassung der Umgebung erfolgt im Allgemeinen mit geeigneten Sensoren. Als Sensoren können zum Beispiel Ultraschallsensoren, Infrarotsensoren, Radarsensoren, LIDAR-Sensoren oder optische Sensoren, beispielsweise Kameras, eingesetzt werden. Aus den mit den Sensoren erfassten Daten wird dann ein dreidimensionales Modell erstellt.

Die eingesetzten Sensoren zur Erfassung der Umgebung können jeweils entweder einzeln oder in Kombination von zwei oder mehreren Sensortypen eingesetzt werden. Bei Einsatz von Ultraschallsensoren, Infrarotsensoren, Radarsensoren oder LIDAR-Sensoren wird jeweils durch Senden eines Signals und Empfangen des Echos aus der Laufzeit zwischen Sendezeitpunkt und Empfangszeitpunkt der Abstand zu Objekten in der Umgebung ermittelt. Aus diesen Abständen lässt sich dann das dreidimensionale Modell der Umgebung erstellen. Bei Einsatz von optischen Sensoren, insbesondere von Kameras, wird ein Bild der Umgebung aufgenommen und aus dem aufgenommenen Bild durch eine geeignete Bildverarbeitung das dreidimensionale Modell erstellt.

Aus dem so erstellten dreidimensionalen Modell können alle möglichen Fahrmanöver, die der Fahrer durchführen könnte, ermittelt werden. Fahrhandlungen, die vom Fahrer durchgeführt werden können, sind zum Beispiel Geradeausfahrten oder Kurvenfahrten, die sowohl vorwärts als auch rückwärts durchgeführt werden können. Auch Kombinationen aus Kurvenfahrten mit unterschiedlichen Radien oder in unterschiedlichen Richtungen, die zum Beispiel auch durch Geradeausfahrten unterbrochen werden können oder an die sich eine Geradeausfahrt anschließt, sind möglich.

Um das Fahrmanöver zu prädizieren, das der Fahrer des Fahrzeugs voraussichtlich durchführen wird, werden zunächst die Geschwindigkeit des Fahrzeugs und die Richtung zum Zeitpunkt der Prädiktion, des voraussichtlichen Fahrmanövers bestimmt. Dies kann zum Beispiel aus Pedalstellungen und/oder Lenkradbewegungen ermittelt werden. Hierbei sind bei den Pedalstellungen insbesondere das Fahrpedal und das Bremspedal relevant. Aus der Stellung des Fahrpedals und der aktuell gefahrenen Geschwindigkeit lässt sich zum Beispiel ermitteln, mit welcher Geschwindigkeit der Fahrer das Fahrmanöver voraussichtlich durchführen wird. Wenn die Geschwindigkeit nun zum Beispiel so groß ist, dass das Fahrzeug innerhalb des von den Sensoren erfassten Bereichs nicht mehr zum Stillstand kommen kann, wird eine Warnung an den Fahrer ausgegeben. Hierdurch wird der Fahrer darauf hingewiesen, dass sich das Fahrzeug für das geplante Fahrmanöver zu schnell bewegt und eine Kollision mit einem Objekt außerhalb des Erfassungsbereiches der Sensoren nicht ausgeschlossen werden kann. Auf die ausgegebene Warnung kann der Fahrer dann reagieren, indem er zum Beispiel entweder das Fahrassistenzsystem abschaltet und selber die Kontrolle über das Fahrzeug übernimmt oder alternativ zum Beispiel auch die Geschwindigkeit reduziert.

Insbesondere, wenn der Fahrer die Unterstützung durch das Fahrassistenzsystem beendet und nicht die Information des Systems beachtet, ist es zum Beispiel möglich, dass aktuelle Fahrdaten des durchgeführten Fahrmanövers und Daten, die die Systemgrenzen repräsentieren, gespeichert werden. Die so gespeicherten Daten können dann zum Beispiel als Nachweis für produkthaftungsrechtliche Fragestellungen herangezogen werden. So ist es zum Beispiel möglich, dass bei einem Fahrassistenzsystem, das den Fahrer bei Annäherung an ein Objekt warnt, und das aufgrund der Leistungsgrenzen der eingesetzten Sensoren, zum Beispiel von Ultraschallsensoren, nur Fahrmanöver bis zu einer Geschwindigkeit von maximal 5 km/h vollständig unterstützen kann, eine Warnung an den Fahrer ausgegeben wird, wenn dieser das Fahrzeug schneller bewegt. Gleichzeitig ist es in diesem Fall zum Beispiel möglich, die maximale Geschwindigkeit, bis zu der das Fahrassistenzsystem den Fahrer unterstützen kann, und die aktuell gefahrene Geschwindigkeit des Fahrers zu speichern.

Die Warnung des Fahrers kann zum Beispiel durch ein akustisches, ein optisches oder ein haptisches Signal erfolgen. Geeignete akustische Signale sind insbesondere die Ausgabe von Warntönen. Alternativ wäre auch eine Sprachausgabe denkbar, die den Fahrer auf die aktuelle Situation hinweist. Bevorzugt ist jedoch die Ausgabe eines Signaltons, da dieser üblicherweise die Aufmerksamkeit des Fahrers stärker erregt.

Geeignete optische Mittel zur Ausgabe einer Warnung umfassen zum Beispiel Warnlampen, die im Sichtbereich des Fahrers aufleuchten. Als Farbe für eine solche Warnleuchte ist insbesondere Rot bevorzugt, da dies sofort von jedem Fahrer des Kraftfahrzeugs als Warnung verstanden wird. Die Warnung an den Fahrer kann dabei zum Beispiel über separate Warnlampen erfolgen oder zum Beispiel in einem Anzeigefeld eines Bordcomputers oder eines Navigationssystems des Fahrzeugs.

Neben dem Einsatz von aufleuchtenden und kontinuierlich leuchtenden Warnlampen ist es alternativ auch möglich, insbesondere um eine stärkere Aufmerksamkeit des Fahrers zu erregen, ein blinkendes Licht zu verwenden.

Geeignete haptische Mittel, mit denen der Fahrer gewarnt werden kann, sind zum Beispiel Vibrationen am Fahrersitz, am Lenkrad oder an den Pedalen. Die Warnung an den Fahrer kann dabei sowohl jeweils einzeln entweder akustisch, optisch oder haptisch oder auch in Kombination von zwei oder allen drei Arten erfolgen. Wenn eine Kombination eingesetzt wird, so ist insbesondere eine Kombination aus einer akustischen und einer optischen Warnung bevorzugt.

Die Systemgrenzen des Fahrassistenzsystems, bei deren Überschreiten die Ausgabe der Warnung an den Fahrer erfolgt, werden erfindungsgemäß durch eine vorgegebene maximale Geschwindigkeit vorgegeben, wobei die Geschwindigkeit von der Umgebung des Fahrzeugs und/oder von Leistungsgrenzen der eingesetzten Systemkomponenten abhängt. Leistungsgrenzen der Systemkomponenten sind zum Beispiel die maximale Reichweite der eingesetzten Abstandssensoren. Aus der Reichweite der Abstandssensoren und dem dadurch erfassbaren Bereich der Umgebung des Kraftfahrzeuges ergibt sich des Weiteren auch die maximal mögliche Geschwindigkeit, mit der das Fahrzeug sicher vom System gesteuert werden kann. So ist zum Beispiel aufgrund der Reichweite von Ultraschallsensoren und dem dadurch erfassten Bereich eine maximale Geschwindigkeit von 5 km/h möglich, um das Fahrzeug rechzeitig innerhalb des Erfassungsbereiches der Sensoren zum Stillstand bringen zu können und auf diese Weise eine Kollision mit einem Objekt zu verhindern. Bei Einsatz von Radarsensoren, LIDAR-Sensoren oder optischen Sensoren ist die Reichweite jeweils größer, sodass das Fahrzeug in diesen Fällen auch mit einer größeren Geschwindigkeit bewegt werden kann. In diesem Fall ergibt sich eine Einschränkung zum Beispiel durch die Umgebung des Fahrzeugs. So ist zum Beispiel bei einem Abbiegeprozess die vom System erfasste Strecke aufgrund von Objekten, die eine freie Sicht unmöglich machen, die erfasste Strecke deutlich kürzer als zum Beispiel eine Strecke bei Geradeausfahrt.

Eine erfindungsgemäße Vorrichtung zur Durchführung des Verfahrens umfasst Sensoren zur Erfassung der Umgebung des Fahrzeugs, ein Steuergerät zur Berechnung eines dreidimensionalen Modells der Umgebung aus von den Sensoren erfassten Daten, Mittel zum Prädizieren eines Fahrmanövers, das der Fahrer des Fahrzeugs voraussichtlich durchführen wird, und Mittel zur Ausgabe einer Warnung an den Fahrer.

Als Sensoren zur Erfassung der Umgebung können beliebige Sensoren eingesetzt werden, mit denen Objekte in der Umgebung des Fahrzeugs erkannt werden können. Geeignete Sensoren sind, wie vorstehend bereits beschrieben, zum Beispiel Ultraschallsensoren, Infrarotsensoren, Radarsensoren, LIDAR-Sensoren oder optische Sensoren, beispielsweise Stereo-Video.

Als Mittel zum Prädizieren eines Fahrmanövers, das der Fahrer des Fahrzeugs voraussichtlich durchführen wird, können zum Beispiel Inertialsensoren eingesetzt werden, die eine Ableitung der kinematischen Fahrzeuggrößen ermöglichen. Weiterhin können zum Prädizieren des Fahrmanövers zum Beispiel auch Pedalstellungen und/oder Lenkradstellungen des Kraftfahrzeugs sowie die aktuell gefahrene Geschwindigkeit herangezogen werden. Zum Prädizieren des geplanten Fahrmanövers wird aus den erfassten Daten mit einem geeigneten Algorithmus ein Fahrmanöver berechnet, das der Fahrer voraussichtlich durchführen wird. Das Fahrmanöver wird dabei insbesondere durch Geschwindigkeit und Richtung charakterisiert.

Aus den Messdaten der zur Erfassung der Umgebung eingesetzten Sensoren wird ein dreidimensionales Modell berechnet. Hierzu wird ebenfalls ein geeigneter Algorithmus eingesetzt, der zum Beispiel in einem Steuergerät für ein Fahrassistenzsystem hinterlegt ist. Anhand des prädizierten Fahrmanövers und des dreidimensionalen Modells der Umgebung wird anschließend mit einem geeigneten Algorithmus ausgewertet, ob das Fahrmanöver durch das Fahrassistenzsystem verlässlich unterstützt wird oder ob Leistungseinschränkungen zu erwarten sind. Leistungseinschränkungen sind, wie vorstehend bereits beschrieben, insbesondere dann zu erwarten, wenn die Geschwindigkeit des Fahrmanövers zum Beispiel für den erfassten Sichtbereich der Umfeldsensoren zu hoch ist.

In einer bevorzugten Ausführungsform wird zur Berechnung des dreidimensionalen Modells der Umgebung und zum Prädizieren des Fahrmanövers das gleiche Steuergerät eingesetzt. Auch wird mit dem gleichen Steuergerät der Algorithmus abgearbeitet, mit dem abgeschätzt wird, ob mit dem prädizierten Fahrmanöver die Systemgrenzen des Fahrassistenzsystems überschritten werden oder ob das geplante Fahrmanöver innerhalb der Grenzen des Fahrassistenzsystems durchgeführt wird und so eine verlässliche Funktion des Fahrassistenzsystems garantiert werden kann.

Die Mittel zur Ausgabe der Warnung an den Fahrer, wenn die Systemgrenzen des Fahrassistenzsystems durch das geplante Fahrmanöver überschritten werden, umfassen zum Beispiel akustische, optische oder haptische Quellen. Geeignete Mittel zur Ausgabe einer Warnung sind zum Beispiel eine Warnlampe und/oder ein Tonerzeuger mit Ausgabegerät. Durch die Warnlampe kann ein optisches Signal erzeugt werden, durch das die Aufmerksamkeit des Fahrers erregt wird. Entsprechend lässt sich zum Beispiel mit einem Tonerzeuger und geeignetem Ausgabegerät ein Warnton erzeugen, um die Aufmerksamkeit des Fahrers zu erregen. Alternativ ist es auch möglich, zum Beispiel eine Sprachausgabe vorzusehen, mit der der Fahrer auf die Situation hingewiesen wird.

In einer weiteren Ausführungsform umfasst die Vorrichtung weiterhin Speicher, in denen die letzten Informationen, Entscheidungsbäume und Fahrerreaktionen aufgezeichnet werden. Insbesondere werden aktuelle Geschwindigkeit und Richtung des Fahrzeugs und die vom Fahrassistenzsystem vorgegebenen Systemgrenzen für das durchzuführende Fahrmanöver gespeichert. Um die Daten zum Beispiel bei Durchführung des Fahrmanövers mit einer zu hohen Geschwindigkeit im Falle einer Kollision auswerten zu können, wobei die Kollision beispielsweise mit Hilfe von Inertialsensoren oder einem Airbag-Steuergerät, detektiert werden kann, werden die Daten auf einen nicht-löschbaren Speicher geschrieben. Dieser kann später ausgelesen werden und zum Beispiel zur Ursachenermittlung der Kollision herangezogen werden.

### Kurze Beschreibung der Zeichnungen

Ein Ausführungsbeispiel der Erfindung ist in der Figur dargestellt und wird in der nachfolgenden Beschreibung näher erläutert.
- Die einzige Figur zeigt: eine Darstellung eines von Sensoren erfassten Bereiches bei einem Abbiegemanöver.

### Ausführungsformen der Erfindung

In der einzigen Figur ist ein von Umfeldsensoren erfasster Bereich bei einem Abbiegemanöver dargestellt.

Ein von einem Fahrzeug 1 befahrbarer Weg 3 ist an seinen Seiten jeweils durch Objekte 5 begrenzt. Die Objekte 5, mit denen der Weg 3 begrenzt wird, können zum Beispiel - wie hier dargestellt - Fahrzeuge sein, die an den Seiten des Weges 3 parken. Neben Fahrzeugen kann der Weg 3 aber auch zum Beispiel durch Mauern, Pflanzen oder Pflanzkübel, Pfosten oder Ähnliches begrenzt sein. Auch eine Begrenzung durch einen Bordstein ist zum Beispiel möglich. Wenn das erfindungsgemäße Verfahren bei Fahrten auf Parkplatzsuche in einem Parkhaus oder einem Parkplatz, wie hier dargestellt, eingesetzt wird, sind die Objekte 5, mit denen der Weg 3 begrenzt wird, jedoch im Allgemeinen Fahrzeuge.

In der hier dargestellten Situation mündet der Weg 3, auf dem sich das Fahrzeug 1 bewegt, in eine Kreuzung 7, an der ein Linksabbiegen, ein Rechtsabbiegen oder Geradeausfahrt möglich ist.

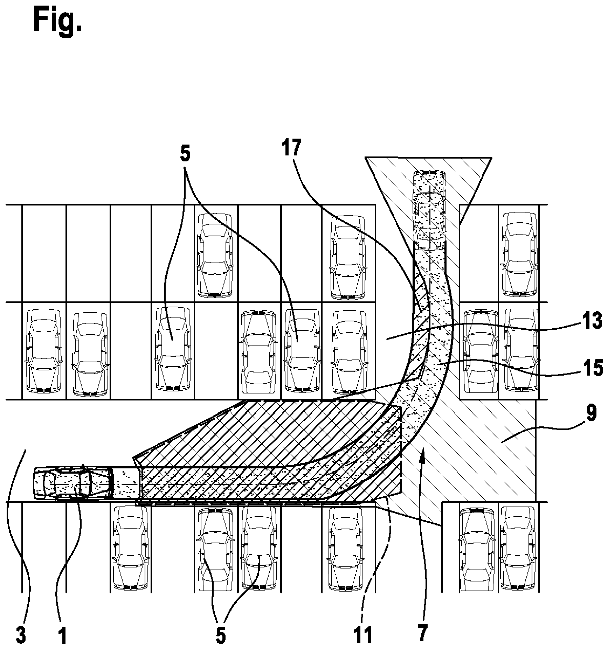

Um den Fahrer bei einem Fahrmanöver zu unterstützen, wird erfindungsgemäß mit Hilfe geeigneter Sensoren die Umgebung des Fahrzeuges 1 erfasst. Die von den Sensoren erfassbaren Bereiche sind hier schraffiert dargestellt und mit Bezugszeichen 9 bezeichnet. Aufgrund der Reichweite der Sensoren wird jedoch nicht der gesamte Bereich 9 unmittelbar an der in Figur 1 dargestellten Position des Fahrzeugs erfasst. An der in Figur 1 dargestellten Position des Fahrzeugs 1 wird lediglich ein Ausschnitt 11 von den Sensoren am Fahrzeug 1 erfasst. Der von den Sensoren erfasste Ausschnitt ist mit einer gestrichelten Linie umrandet und hat das Bezugszeichen 11.

Anhand des aktuell erfassten Bereichs 11 lässt sich sehen, dass an der Position, an der sich das Fahrzeug 1 derzeit befindet, nicht erkannt werden kann, was sich zum Beispiel auf dem den Weg 3 kreuzenden Weg 13 befindet. Zudem ist die Reichweite der eingesetzten Sensoren zur Erfassung der Umgebung eingeschränkt, sodass auch in Fahrtrichtung des Fahrzeugs nur ein begrenzter Bereich erfasst wird. Aus den zu jedem Zeitpunkt von den Sensoren erfassten Daten kann ein dreidimensionales Modell der Umgebung erstellt werden. Anhand des dreidimensionalen Modells ist es weiterhin möglich, bereits eine Vorentscheidung zu treffen, welche Fahrmanöver grundsätzlich möglich sind. In der in Figur 1 dargestellten Situation ist dies zum Beispiel ein Abbiegemanöver nach Links, ein Abbiegemanöver nach Rechts oder Geradeausfahrt.

Neben der Erfassung der Umgebung des Fahrzeugs wird weiterhin auch bestimmt, was für ein Fahrmanöver der Fahrer des Fahrzeugs 1 voraussichtlich durchführen wird. Hierzu werden zum Beispiel Lenkradstellungen und Pedalpositionen herangezogen. Weiterhin kann zum Beispiel auch zur Prädiktion herangezogen werden, ob der Fahrtrichtungsanzeiger des Fahrzeugs betätigt wurde. In dem hier dargestellten Ausführungsbeispiel wird ein Abbiegemanöver nach Links prädiziert. Dies ist anhand eines Fahrschlauchs 15, der den Bereich markiert, der vom Fahrzeug bei einem Abbiegemanöver nach Links überstrichen wird, dargestellt.

Während der Durchführung des Fahrmanövers wird weiterhin kontinuierlich die Umgebung des Fahrzeugs erfasst. Aufgrund der Richtung und Reichweite der Sensoren ist jedoch ein Teil des voraussichtlichen Fahrschlauches während des Fahrmanövers nicht erfassbar. Dieser Bereich wird als blinder Bereich 17 bezeichnet. Das Fahrassistenzsystem kann nicht erkennen, ob sich im blinden Bereich 17 Objekte befinden, die die Durchführung des Fahrmanövers behindern oder verunmöglichen können. Da sich ein blinder Bereich auf dem vom Fahrzeug zu überstreichenden Weg befindet, wird das Fahrassistenzsystem bereits bei geringen Geschwindigkeiten an seine Grenzen geführt. Aufgrund des blinden Bereichs ist es somit notwendig, den Fahrer darüber zu informieren und eine entsprechende Warnung auszugeben, damit der Fahrer die Kontrolle über das Fahrzeug übernehmen kann. Alternativ ist es auch möglich, dass der Fahrer nur überprüft, ob eine Gefährdung zum Beispiel durch eine Kollision besteht und in dem Fall, dass keine solche Gefährdung besteht, das automatische Fahrmanöver weiter fortgesetzt wird.

Neben einem blinden Bereich, in dem keine Daten durch die Umgebungssensoren erfasst werden, ist es alternativ auch möglich, dass eine Erfassung zwar erfolgt, jedoch die Reichweite der Sensoren für die vom Fahrer vorgesehene Geschwindigkeit nicht ausreichend groß ist. Dies ist zum Beispiel dann der Fall, wenn eine Geradeausfahrt geplant ist, jedoch nur ein eingeschränkter Bereich, beispielsweise aufgrund der Reichweite der Sensoren, erfasst wird. Auch in diesem Fall ist der Fahrer zu informieren, dass die Systemgrenzen des Fahrassistenzsystems überschritten werden und eine Kollision mit einem Objekt nicht mit Sicherheit ausgeschlossen werden kann, da die Geschwindigkeit für den erfassten Bereich zu groß ist. In diesem Fall wird der Fahrer somit insbesondere aufgefordert, das Fahrzeug abzubremsen und das Fahrmanöver langsamer durchzuführen. Alternativ besteht die Möglichkeit, dass die Kontrolle vom Fahrassistenzsystem abgebrochen wird und an den Fahrer übergeben wird, so dass der Fahrer eigenverantwortlich das Fahrzeug fährt.

Bei einer Geradeausfahrt wäre dies zum Beispiel der Fall, wenn die Geschwindigkeit des Fahrzeugs 1 so groß ist, dass das Fahrzeug nicht innerhalb des mit 11 bezeichneten aktuell erfassten Bereichs angehalten werden kann.

Neben der in Figur 1 dargestellten Ausführungsform, bei der das Verfahren beispielhaft anhand eines Linksabbiegemanövers dargestellt ist, kann das Verfahren auch für Geradeausfahrten, Abbiegemanöver nach Rechts oder auch Einparkmanöver eingesetzt werden.

## Patentansprüche

1. Verfahren zur Unterstützung eines Fahrers eines Kraftfahrzeugs (1) bei einem Fahrmanöver, folgende Schritte umfassend:
(a) Erfassen der Umgebung und Erstellen eines dreidimensionalen Modells aus den erfassten Daten der Umgebung,
(b) Prädizieren eines Fahrmanövers, das der Fahrer des Kraftfahrzeugs (1) voraussichtlich durchführen wird,
(c) Ausgabe einer Warnung an den Fahrer des Kraftfahrzeugs (1), wenn das in Schritt (b) prädizierte Fahrmanöver Systemgrenzen eines zur Unterstützung des Fahrers eingesetzten Fahrassistenzsystems überschreitet.
**dadurch gekennzeichnet, dass** die Systemgrenzen durch eine vorgegebene maximale Geschwindigkeit vorgegeben werden, wobei die Geschwindigkeit von der Umgebung des Kraftfahrzeugs und/oder von Leistungsgrenzen der eingesetzten Systemkomponenten abhängt.

2. Verfahren gemäß Anspruch 1, **dadurch gekennzeichnet, dass** das Fahrmanöver, das der Fahrer des Fahrzeugs voraussichtlich durchführen wird, aus Pedalstellungen und/oder Lenkradbewegungen ermittelt wird.

3. Verfahren gemäß Anspruch 1 oder 2, **dadurch gekennzeichnet, dass** die Warnung ein optisches Signal oder ein akustisches Signal ist.

4. Verfahren gemäß einem der Ansprüche 1 bis 3, **dadurch gekennzeichnet, dass** das Fahrmanöver Geradeausfahrt, Kurvenfahrt und Einparkmanöver umfasst.

5. Verfahren gemäß einem der Ansprüche 1 bis 4, **dadurch gekennzeichnet, dass** zur Erfassung der Umgebung Ultraschallsensoren, Infrarotsensoren, optische Sensoren, Radarsensoren oder LIDAR-Sensoren jeweils einzeln oder in Kombination von zwei oder mehreren Sensortypen eingesetzt werden.

6. Verfahren gemäß einem der Ansprüche 1 bis 5, **dadurch gekennzeichnet, dass** bei Ausgabe einer Warnung an den Fahrer aktuelle Fahrdaten des durchgeführten Fahrmanövers und Daten, die die Systemgrenzen repräsentieren gespeichert werden.

7. Verfahren gemäß Anspruch 6, **dadurch gekennzeichnet, dass** die Daten bei einer Kollision in einen permanenten Speicher geschrieben werden.

8. Vorrichtung zur Durchführung des Verfahrens gemäß einem der Ansprüche 1 bis 7, umfassend Sensoren zur Erfassung der Umgebung des Kraftfahrzeugs, ein Steuergerät zur Berechnung eines dreidimensionalen Modells der Umgebung aus von den Sensoren erfassten Daten, Mittel zum Prädizieren eines Fahrmanövers, das der Fahrer des Kraftfahrzeugs voraussichtlich durchführen wird und Mittel zur Ausgabe einer Warnung an den Fahrer, wobei das Steuergerät zur Durchführung des Verfahrens gemäß einem der Ansprüche 1 bis 7 programmiert ist.

9. Vorrichtung gemäß Anspruch 8, **dadurch gekennzeichnet, dass** zur Berechnung des dreidimensionalen Modells der Umgebung und zum Prädizieren des Fahrmanövers das gleiche Steuergerät eingesetzt wird.

10. Vorrichtung gemäß Anspruch 8 oder 9, **dadurch gekennzeichnet, dass** die Sensoren zur Erfassung der Umgebung Ultraschallsensoren, Infrarotsensoren, optische Sensoren, Radarsensoren und/oder LIDAR-Sensoren sind.

11. Vorrichtung gemäß einem der Ansprüche 8 bis 10, **dadurch gekennzeichnet, dass** die Mittel zur Ausgabe einer Warnung eine Warnlampe und/oder einen Tonerzeuger mit Ausgabegerät umfassen.

## Claims

1. Method for assisting a driver of a motor vehicle (1) in a driving manoeuvre, comprising the following steps:
(a) capture of the surroundings and creation of a three dimensional model from the captured data of the surroundings,
(b) prediction of a driving manoeuvre that the driver of the motor vehicle (1) will probably perform,
(c) output of a warning to the driver of a motor vehicle (1) if the driving manoeuvre predicted in step (b) exceeds system limits of a driving assistance system used to assist the driver,
**characterized in that** the system limits are prescribed by a prescribed maximum speed, the speed being dependent on the surroundings of the motor vehicle and/or on performance limits of the system components used.

2. Method according to Claim 1, **characterized in that** the driving manoeuvre that the driver of the vehicle will probably perform is ascertained from pedal positions and/or steering wheel movements.

3. Method according to Claim 1 or 2, **characterized in that** the warning is a visual signal or an audible signal.

4. Method according to one of Claims 1 to 3, **characterized in that** the driving manoeuvre comprises driving straight on, driving round bends and parking manoeuvres.

5. Method according to one of Claims 1 to 4, **characterized in that** the surroundings are captured by using ultrasonic sensors, infrared sensors, optical sensors, radar sensors or LIDAR sensors, in each case individually or in a combination of two or more sensor types.

6. Method according to one of Claims 1 to 5, **characterized in that** when a warning is output to the driver, current driving data from the driving manoeuvre performed and data that represent the system limits are stored.

7. Method according to Claim 6, **characterized in that** the data are written to a permanent memory in the event of a collision.

8. Apparatus for performing the method according to one of Claims 1 to 7, comprising sensors for capturing the surroundings of the motor vehicle, a controller for computing a three dimensional model of the surroundings from data captured by the sensors, means for predicting a driving manoeuvre that the driver of the motor vehicle will probably perform and means for outputting a warning to the driver, wherein the controller is programmed to perform the method according to one of Claims 1 to 7.

9. Apparatus according to Claim 8, **characterized in that** the three dimensional model of the surroundings is computed and the driving manoeuvre is predicted by using the same controller.

10. Apparatus according to Claim 8 or 9, **characterized in that** the sensors for capturing the surroundings are ultrasonic sensors, infrared sensors, optical sensors, radar sensors and/or LIDAR sensors.

11. Apparatus according to one of Claims 8 to 10, **characterized in that** the means for outputting a warning comprise a warning lamp and/or a tone generator with an output device.

## Revendications

1. Procédé d'assistance d'un conducteur d'un véhicule automobile (1) lors d'une manoeuvre de conduite, comprenant les étapes suivantes :
(a) de la détection de l'environnement et de l'établissement d'un modèle tridimensionnel à partir des données détectées au sujet de l'environnement,
(b) de la prédiction d'une manoeuvre de conduite que le conducteur du véhicule automobile (1) va prévisionnellement réaliser,
(c) de l'édition d'un avertissement à l'attention du conducteur du véhicule automobile (1) si la manoeuvre de conduite prédite dans l'étape (b) dépasse des limites du système d'un système d'assistance à la conduite utilisé pour assister le conducteur,
**caractérisé en ce que** les limites du système sont prédéfinies par une vitesse maximale prédéfinie, la vitesse dépendant de l'environnement du véhicule automobile et/ou de limites de performances des composants de système utilisés.

2. Procédé selon la revendication 1, **caractérisé en ce que** la manoeuvre de conduite que le conducteur du véhicule va prévisionnellement réaliser est déterminée à partir de positions de pédales et/ou de déplacements du volant.

3. Procédé selon la revendication 1 ou la revendication 2, **caractérisé en ce que** l'avertissement est un signal optique ou un signal acoustique.

4. Procédé selon l'une quelconque des revendications 1 à 3, **caractérisé en ce que** la manoeuvre de conduite comprend un déplacement en avant, un déplacement en virage et une manoeuvre de stationnement.

5. Procédé selon l'une quelconque des revendications 1 à 4, **caractérisé en ce que** pour la détection de l'environnement, on utilise des capteurs aux ultrasons, des capteurs à infrarouges, des capteurs optiques, des capteurs radars ou des capteurs LIDAR, chaque fois seuls ou en association de deux ou de plusieurs types de capteurs.

6. Procédé selon l'une quelconque des revendications 1 à 5, **caractérisé en ce que** lors de l'édition d'un avertissement à l'attention du conducteur, des données de conduite actuelles de la manoeuvre de conduite réalisée et des données représentant les limites du système sont mémorisées.

7. Procédé selon la revendication 6, **caractérisé en ce que** lors d'une collision, les données sont écrites dans une mémoire permanente.

8. Dispositif destiné à réaliser le procédé selon l'une quelconque des revendications 1 à 7, comprenant des capteurs destinés à détecter l'environnement du véhicule automobile, un instrument de commande, destiné à calculer un modèle tridimensionnel de l'environnement à partir des données détectées par les capteurs, des moyens de prédiction d'une manoeuvre de conduite que le conducteur du véhicule va prévisionnellement réaliser et des moyens d'édition d'un avertissement à l'attention du conducteur, l'instrument de commande étant programmé pour réaliser le procédé selon l'une quelconque des revendications 1 à 7.

9. Dispositif selon la revendication 8, **caractérisé en ce qu'**on utilise le même instrument de commande pour calculer le modèle tridimensionnel de l'environnement et pour prédire la manoeuvre de conduite.

10. Dispositif selon la revendication 8 ou la revendication 9, **caractérisé en ce que** les capteurs destinés à détecter l'environnement sont des capteurs à ultrasons, des capteurs à infrarouges, des capteurs optiques, des capteurs radars et/ou des capteur LIDAR.

11. Dispositif selon l'une quelconque des revendications 8 à 10, **caractérisé en ce que** les moyens d'édition d'un avertissement comprennent un témoin lumineux et/ou un générateur de sons avec appareil d'édition.
